(19) Europäisches Patentamt
European Patent Office
Office européen des brevets

(11) Numéro de publication: 0 392 948 A1

(12) DEMANDE DE BREVET EUROPEEN

(21) Numéro de dépôt: 90420185.2

(51) Int. Cl.[5]: C08G 77/38

(22) Date de dépôt: 11.04.90

(30) Priorité: 13.04.89 FR 8905176

(43) Date de publication de la demande: 17.10.90 Bulletin 90/42

(84) Etats contractants désignés: AT BE CH DE DK ES FR GB GR IT LI LU NL SE

(71) Demandeur: RHONE-POULENC CHIMIE
25, quai Paul Doumer
F-92408 Courbevoie Cédex(FR)

(72) Inventeur: Frances, Jean-Marc
9, Avenue Condorcet
F-69100 Villeurbanne(FR)

(74) Mandataire: Seugnet, Jean Louis et al
RHONE-POULENC CHIMIE Service Brevets Chimie Centre de Recherches des Carrières
B.P. 62
F-69192 Saint-Fons Cédex(FR)

(54) **Procédé de préparation, par hydroformylation, de polyorganosiloxane à fonction propanaldehyde.**

(57) L'invention concerne un procédé de préparation de polyorganosiloxane à fonction propanaldéhyde, caractérisé en ce qu'on fait réagir le mélange CO + $H_2$ sur les groupes ≡ Si Vinyle de l'organopolysiloxane de départ, en présence d'un composé des métaux de transition du groupe 8 et d'une triorganophosphine et/ou d'une triorganophosphite, la masse réactionnelle obtenue en fin de réaction étant utilisée, sans séparation du composé métallique, pour l'obtention d'élastomères silicones.

Elastomères obtenus avec les organopolysiloxanes préparés selon le procédé de la présente invention.

EP 0 392 948 A1

# PROCEDE DE PREPARATION, PAR HYDROFORMYLATION, DE POLYORGANOSILOXANE A FONCTION PROPANALDEHYDE

La présente invention concerne un procédé de préparation de polyorganosiloxanes comportant par molécule au moins un motif siloxyle à fonction propanaldéhyde, c'est-à-dire au moins un groupement $-CH_2-CH_2-CHO$ ou $-CH(CHO)-CH_3$ lié à un atome de silicium. De tels polysiloxanes sont réticulables à la température ambiante en élastomères sous l'action de l'oxygène atmosphérique.

Plus précisement la présente invention concerne un procédé d'hydroformylation de polyorganosiloxane-(s) comportant au moins un groupement siloxyle avec une liaison $\equiv Si-CH=CH_2$, dans lequel la masse réactionnelle contenant le (ou les) polyorganosiloxane(s) à fonction propanaldéhyde obtenu(s) en fin de réaction peut être utilisée directement pour l'obtention d'élastomères silicones par réticulation a l'oxygène atmosphérique, sans nécessiter la séparation du (ou des) polyorganosiloxanes obtenu(s) des autres constituants de la masse réactionnelle.

Ce procédé selon la présente invention présente l'avantage de pouvoir être mis en oeuvre sans utiliser de solvants organiques.

Ce procédé a l'avantage d'être extrêmement simple pour sa mise en oeuvre.

Ce procédé présente l'avantage de ne pas nécessiter de manipulations pour séparer le (ou les) polysiloxanes obtenu(s) du système catalytique utilisé, notamment des composés métalliques.

Ce composé présente l'avantage de nécessiter de faibles quantités de catalyseur.

Ce procédé présente l'avantage d'être rapide.

Il a maintenant été trouvé et c'est ce qui fait l'objet de la présente invention un procédé de préparation de polyorganosiloxane, réticulable en élastomère silicone, présentant par molécule au moins un motif répondant à la formule générale :

$$X\ Ra\ Si\ O_{\frac{3-a}{2}} \qquad (1)$$

dans laquelle :

- X est choisi parmi les radicaux $-CH_2-CH_2-CHO$ et $-\overset{\overset{CHO}{|}}{C}H-CH_3$,
- les radicaux R, identiques ou différents, sont choisis parmi le radical phényle, trifluoro-3,3,3 propyle et un radical alkyle ayant de 1 à 12 atomes de carbone,
- a est choisi parmi 0, 1 et 2,

caractérisé en ce que l'on effectue la réaction, au moins partielle, d'un polysiloxane dont au moins un motif siloxyle répond à la formule générale

$$(CH_2 = CH)\ R_a\ Si\ O_{\frac{3-a}{2}} \qquad (1')$$

dans laquelle R et a ont la signification donnée ci-avant, avec de l'hydrogène et du monoxyde de carbone, en présence d'un composé des métaux de transition du groupe 8 et d'une triorganophosphine et/ou d'un triorganophosphite, caractérisé en ce qu'en fin de réaction on soutire la masse réactionnelle homogène, contenant notamment le polysiloxane, ayant au moins un motif de formule (1) et le composé métallique du système catalytique, la dite masse réactionnelle étant réticulable en élastomère silicone sous l'action de l'oxygène de l'air.

Comme exemple de radicaux R on peut citer en tant que radical alkyle, les radicaux méthyle, éthyle, propyle, hexyle et dodécyle. De préférence au moins 50 % en nombre des radicaux R sont des radicaux méthyle.

Les autres motifs siloxyle du (ou des) polysiloxane(s) obtenu(s) avec le procédé selon la présente invention répondent de préférence à la formule

$$R'_x SiO_{\frac{4-x}{2}}$$

dans laquelle
- les radicaux R′, identiques ou différents, sont choisis parmi les radicaux R, vinyle, hydroxyle et alcoxy ayant de 1 à 3 atomes de carbone et,
- x est choisi parmi 0, 1, 2 et 3.

De préférence R′ est choisi parmi les radicaux méthyle, phényle et vinyle, au moins 50 % en nombres des radicaux R′ étant méthyle.

Les polyorganosiloxanes obtenus avec le procédé selon l'invention peuvent présenter une structure linéaire, cyclique ou ramifiée.

Le (ou les) polyorganosiloxane(s) de départ mis en oeuvre dans le procédé selon la présente invention ont au moins un motif siloxyle répondant à la formule générale

$$(CH_2 = CH)\ R_a\ Si\ O_{\frac{3-a}{2}} \qquad (1')$$

dans laquelle R et a ont la signification donnée ci-avant dans la formule (1), les autres motifs siloxy répondant de préférence à la formule

$$R'xSiO_{\frac{4-x}{2}}$$

dans laquelle les radicaux R′, identiques ou différents, sont choisis parmi les radicaux R définis ci-avant et parmi les radicaux hydroxyle et alcoxy ayant de 1 à 3 atomes de carbone, x étant choisi parmi 0, 1, 2 et 3.

Ainsi le polyorganosiloxane, ayant au moins un motif siloxyle de formule (1′), utilisé pour la mise en oeuvre du procédé selon la présente invention peut avoir une structure linéaire, cyclique ou ramifiée.

Il doit être indiqué que le procédé selon la présente invention peut être mis en oeuvre avec un mélange de polyorganosiloxanes, de structure linéaire, cyclique ou ramifiée.

Le procédé selon la présente invention vise plus particulièrement l'obtention de polyorganosiloxane contenant plus de 3 groupements siloxyle et dont un au moins répond à la formule (1) ci-avant.

Ainsi le procédé selon la présente invention permet notamment l'obtention de copolymère diorganopolysiloxanes statistiques, séquencés ou à blocs, à fonction propanaldéhyde de formule :

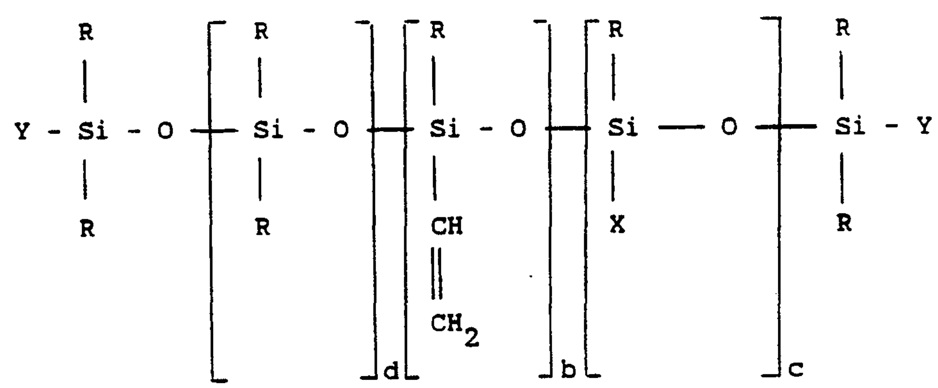

(2)

dans laquelle :
- X et R, identiques ou différents, ont la signification donnée ci-dessus,
- Y, identiques ou différents, sont choisis parmi les radicaux R et X,
- d est un nombre entier compris entre 0 et 1 000 inclusivement,
- b est un nombre entier compris entre 0 et 50 inclusivement,
- c est un nombre entier compris entre 0 et 100 inclusivement et, si c est 0, au moins un des deux radicaux

Y est X et,
- d + b + c est au moins égal à 1
et ceux de formule :

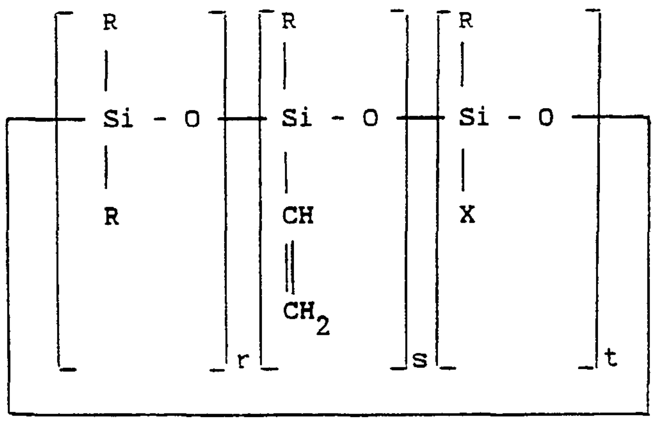
(3)

dans laquelle :
- R et X ont la signification ci-dessus,
- r est un nombre entier compris entre 0 et 9 inclus,
- s est un nombre entier compris entre 0 et 9 inclus,
- t est un nombre entier compris entre 1 et 10 inclus.

De préférence les polymères de formule (2) sont ceux pour lesquels :
- d est un nombre entier compris entre 1 et 400 inclus,
- b est un nombre entier compris entre 0 et 20 inclus,
- c est un nombre entier compris entre 2 et 60 inclus,
- R est choisi parmi les radicaux méthyle et phényle, au moins 50 % en nombre de radicaux R étant méthyle.

De préférence les polymères de formule (3) sont ceux pour lesquels :
- r est un nombre entier compris entre 0 et 5 inclus,
- s est un nombre entier compris entre 0 et 5 inclus,
- t est un nombre entier compris entre 1 et 6 inclus,
- r + s + t est compris entre 3 et 6 inclus,
- R est choisi parmi les radicaux méthyle et phényle, 50 % au moins en nombre des radicaux R étant méthyle.

Les polymères organopolysiloxanes de formule 1, 2 et 3 obtenus avec le procédé selon la présente invention contiennent en nombre plus de 60 % en nombre des radicaux X dont la formule est $-CH_2-CH_2-CHO$.

Les polyorganosiloxanes de formule 2 et 3 sont préparés en mettant en oeuvre le procédé selon la présente invention, les organopolysiloxanes de départ étant choisis parmi ceux de formule :

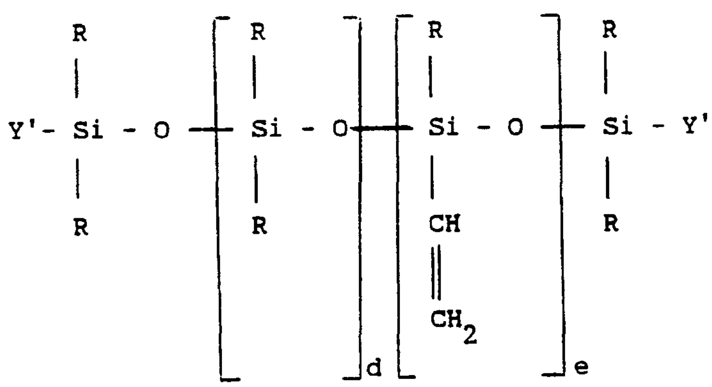
(2')

dans laquelle :

- R et a ont la signification ci-dessus,
- e est égal à b + c, et
- Y′ est choisi parmi un radical vinyle et le radical R et quand d = O, au moins un des deux Y′ est un radical vinyle,

et ceux de formule :

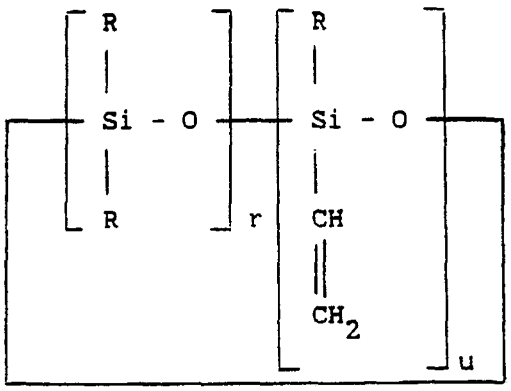

(3')

dans laquelle R a la signification donnée ci-dessus et u est égal à s + t, r + u étant compris entre 3 et 10 inclus.

Pour la mise en oeuvre du procédé selon la présente invention on charge dans un réacteur le ou les organopolysiloxanes de départ répondant aux formules 1′, 2′ ou 3′ ci-avant. Sous agitation on introduit dans le réacteur le composé du métal de transition du groupe 8, de préférence du rhodium et/ou du cobalt, puis la triorganophosphine et/ou le triorganophophite. Il peut être avantageux que le composé métallique, avant son introduction dans le réacteur, ait été mis en solution dans un organopolysiloxane de bas poids moléculaire, comme par exemple dans un cyclotétrasiloxane, notamment dans un tétraméthyltétravinylcyclotétrasiloxane, ou dans un solvant organique compatible avec les silicones. On introduit alors dans le réacteur préalablement purgé par de l'azote, ou par de l'argon (ou par le mélange de $CO/H_2$ lui-même) le monoxyde de carbone et l'hydrogène sous une pression généralement comprise entre 5 et 200 bars (de préférence entre 20 et 60 bars) et une température comprise entre 20 et 180° C, de préférence entre 60 et 120° C. La réaction dure entre 5 minutes et 3 heures.

Le mélange de CO et $H_2$ utilisé est généralement dans un rapport $CO/H_2$ molaire compris entre 10/1 et 1/10, avantageusement entre 3/1 et 1/3, de préférence aux environs ou égal à 1/1.

A la fin de la réaction on refroidit le réacteur et le purge par exemple par de l'azote ou de l'argon. On soutire alors la masse réactionnelle coulante, le plus souvent incolore et transparente (notamment lorsque le composé métallique est un composé du rhodium), ne nécessitant pas de filtration pour l'utilisation et la transformation du ou des organopolysiloxanes obtenu(s) (à fonction propanaldéhyde) en élastomères silicones sous l'action de l'oxygène de l'air.

Eventuellement on peut éliminer la phophine et/ou le phosphite utilisé(s) en mettant la masse réactionnelle sous dépression avant de la soutirer.

Bien entendu pour conserver cette masse réactionnelle, contenant au moins un organopolysiloxane à fonction propanaldéhyde, il est nécessaire de la tenir à l'abri de l'oxygène, par exemple sous azote dans des récipients très bien fermés.

La quantité, en poids, de composé du métal de transition du groupe 8, de préférence du rhodium et/ou du cobalt, utilisée correspond généralement (exprimée en métal) à entre 0,1 et 100 ppm (parties par million) basée sur l'organopolysiloxane de départ (de formule 1′, 2′, 3′), avantageusement entre 0,5 et 25 ppm.

Le rapport EqSiVi/atg de métal est généralement supérieur à 600, avantageusement compris entre 700 et 40 000, de préférence entre 800 et 35 000. Dans ce rapport EqSiVi représente le nombre total d'équivalent de mole de groupement SiVinyle dans le (ou les) polysiloxane(s) de départ, tandis que atg de métal représente le nombre d'atome-gramme de métal utilisé (de préférence de rhodium et/ou cobalt) dans le système catalytique.

Dans le procédé selon la présente invention le rapport atg P/atg de métal est compris généralement entre 1 et 60, de préférence entre 5 et 50, le terme atg de métal étant défini ci-avant, tandis que atg P représente le nombre d'atome-gramme de phosphore dans la phosphine et/ou le phosphite utilisé.

Le composé métallique utilisé dans le système catalytique du procédé selon la présente invention est

un composé des métaux de transition du groupe 8 dans la table de classification périodique des éléments. De façon avantageuse le composé métallique est plus particulièrement choisi parmi les composés métalliques du rhodium et/ou du cobalt.

Parmi les composés, ou complexes, du rhodium on peut notamment citer ceux de formule :

- Rh $Cl(PR^2_3)_3$ dans laquelle $R^2$ représente un groupement alcoyle en C1 à C12, phényle, cyclohexyle,
- Rh $H(CO)(PR^2_3)_3$ dans laquelle $R^2$ à la signification donnée ci-dessus,
- Rh $Cl(CO)(PR^2_3)_2$ dans laquelle $R^2$ à la signification donnée ci-dessus,

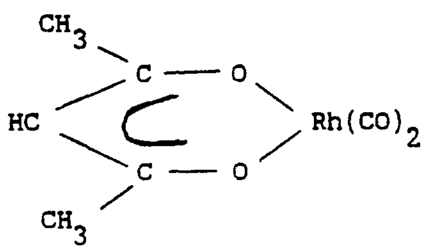

- [Rh ($\mu$-Cl)$R^3_2$]$_2$ dans laquelle $R^3$ peut représenter un groupement carbonyle CO, trialkyle phosphine, triaryle phosphine, triaryl phosphite, trialkyle phosphite, $\mu$-Cl signifiant que l'atome de chlore ponte deux atomes de rhodium (Rh←Cl-Rh).
- [Rh ($\mu$S$R^4$)$R^3_2$]$_2$ dans laquelle $R^3$ à la signification ci-avant, $R^4$ représente un groupement alkyle (en C1 à C12), par exemple tertiobutyle, phényle ou cyclohexyle et $\mu$S signifie que l'atome de soufre ponte deux atomes de rhodium.
- [Rh ($\mu$-Cl)$R^5$]$_2$ dans laquelle $R^5$ représente un groupement diènyle, par exemple cyclooctadiène.
- $[Rh(CO_4)]_2$, $Rh_4(CO)_{12}$, $Rh_6(CO)_{16}$.

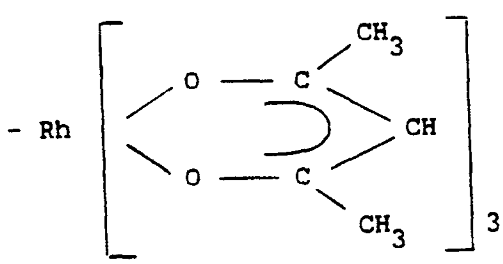

appelé acétylacétonate de rhodium,

- Rh $Cl_3$, $3H_2O$
- $Rh_2(OCO\text{-}R^4)_4$, appelés carboxylates de rhodium, dans laquelle $R^4$ à la signification donnée ci-avant.

Le composé de cobalt peut être notamment celui de formule : $(Co)_2(CO)_8$.

La triorganophosphine utilisée a pour formule $P(R^1)_3$ dans laquelle $R^1$, identiques ou différents, représentent un groupement alkyle en C1 à C12, un groupement phényle, un groupement cycloalkyle. Dans le terme triorganophosphine il doit être entendu que la demanderesse inclut les diphosphines de formule générale $R^1_2$ P-R$''$-P$R^1_2$ dans laquelle $R^1$ a la signification donnée ci-avant et R$''$ représente un groupement alcoylène en $C_1$ à $C_{12}$.

A titre de triorganophosphines on peut notamment citer celles de formule $P(C_2H_5)_3$, $P(C_4H_9)_3$, $P(C_6H_5)_3$.

A titre de diphosphine on peut notamment citer celle de formule $(C_6H_5)_2P\text{-}CH_2\text{-}CH_2\text{-}P\text{-}(C_6H_5)_2$.

Le phosphite utilisé a la formule générale $P(OR^1)_3$ dans laquelle $R^1$ a la signification donnée ci-avant pour $R^1$ dans la phosphine. A titre de phosphite on peut notamment citer ceux de formule $(C_2H_5O)_3P$, $(C_6H_5O)_3P$, $(CH_3\text{-}CH_2\text{-}CH_2O)_3P$.

Les exemples suivants illustrent des modes de réalisation du procédé selon la présente invention.

## EXEMPLE 1

Préparation d'un $\alpha$ - $\omega$ triméthylsiloxy, polydiméthylsiloxy, méthylpropanal siloxane.

Dans un autoclave en acier inoxydable d'un litre on introduit :
- 488 g (soit 0,054 Eq/Vi) d'une huile de formule moyenne

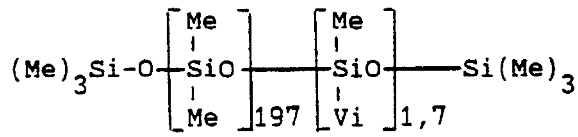

dans laquelle Me signifie méthyle et Vi signifie vinyle,
- 584 mg d'une solution de $Rh_2$ (éthyl 2-hexanoate)$_4$ dans du tétraméthyltétravinyl-cyclotétrasiloxane, la dite solution contenant 0,88 % en poids de rhodium, soit 5,14 mg de rhodium, c'est-à-dire 0,00005 atg de rhodium. La solution obtenue par chauffage préalable à 110° C pendant 5 minutes
- 0,25 g de $P(C_4H_9)_3$ soit 1,23 x $10^{-3}$ atg de phosphore.

Le rapport atg P/atg Rh est de 25, tandis que le rapport Eq.Vi/atg Rh est de 1080.

On purge le réacteur à l'azote, on chauffe sous agitation et atmosphère d'azote le mélange à 104° C, puis on introduit, à l'aide d'une réserve de 500 cm$^3$ en pression à 99 bars de mélange $H_2$ + CO où $H_2$/CO = 1, le mélange gazeux $H_2$ + CO de façon à atteindre une pression constante de 30 bars dans l'autoclave.

La réaction débute aussitôt et on peut suivre la consommation du mélange gazeux à l'intérieur de la réserve grâce à un système de mesure de pression.

La pression du mélange $H_2$/CO est maintenue à 30 bars et la température à 105° C pendant toute la durée de la réaction soit 22 mn. La consommation du mélange $H_2$/CO correspond à une diminution de pression dans la réserve de 6.4 bars.

Après refroidissement de la masse réactionnelle à la température ambiante (23° C) et purge du réacteur à l'azote on soutire une huile de formule moyenne

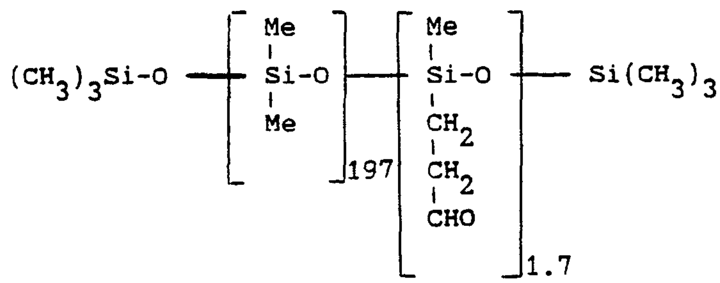

transparente et incolore.

## EXEMPLE 2

Préparation d'un mélange d'organopolysiloxanes à fonction propionaldéhyde, dont l'un est une huile α - ω triméthylsiloxy, polydiméthylsiloxy, méthylpropanalsiloxane et dont l'autre est une résine comprenant des motifs triméthylsiloxy, méthylpropanalsiloxy et $SiO_2$.

Dans un autoclave en acier inoxydable de capacité 1 litre on introduit sous azote un mélange comprenant :
- 286 g (soit 0,032 EqVi) de l'organopolysiloxane utilisé à l'exemple 1,

et 125 g (soit 0,130 EqVi) d'une résine comprenant en moles
- 40 % de motifs $Me_3SiO_{0,5}$,
- 6 % de motifs MeViSiO,
- 53,5 % de motifs $SiO_2$,

puis 0,818 g d'une solution de $Rh_2$ (éthyl2 hexanoate)$_4$ dans du tétraméthyltétravinyl cyclotétrasiloxane, la dite solution contenant 0,88 % en poids de rhodium, soit 7,2 mg de rhodium, c'est-à-dire 0,00007 atg de rhodium. La solution est obtenue par chauffage à 110° C pendant 5 minutes
- 0,25 g de $P(C_4H_9)_3$ soit 1,23 x $10^{-3}$ atg de phosphore.

Le rapport atg de P/atg de Rh est de 17,6 et le rapport EqVi/atg de Rh = 2314.

On chauffe sous agitation et atmosphère d'azote le mélange à 105 °C puis on introduit à l'aide d'une réserve de 500 $cm^3$ en pression de 100 bars de mélange $H_2$ + CO où $H_2/CO=1$, le gaz de synthèse $H_2/CO$ de façon à atteindre une pression constante de 30 bars dans l'autoclave.

La réaction débute aussitôt, et on peut suivre la consommation du mélange gazeux à l'intérieur de la réserve grâce à un système de mesure de pression. On consomme alors 16 bars de mélange $H_2/CO$ en 14 minutes à 105 °C soit un taux de transformation complet des groupements $(CH_3)ViSiO_{2/2}$.

Après retour à température ambiante et purge du réacteur à l'azote on soutire la masse réactionnelle obtenue, transparente et incolore.

La structure de la masse est confirmée par une étude spectroscopique R.M.N$^1$H, $^{29}$Si qui révèle l'obtention d'une composition comprenant un organopolysiloxane de formule :

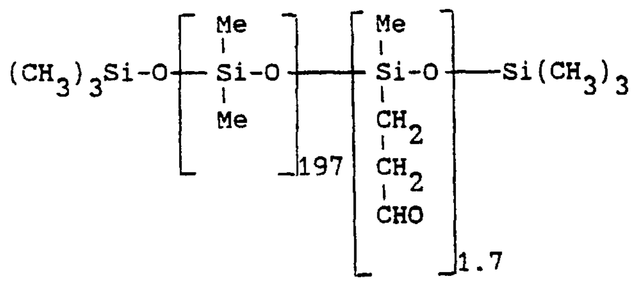

69 % p/p

et d'une résine ayant les motifs

$OHC-(CH_2)_2-Si(CH_3)O_{2/2}$ ; $(CH_3)_3SiO_{1/2}$ ; $SiO_2$ 31 % p/p

Teneur en groupements aldéhyde 1.18 %

Teneur en groupements vinyle O %

EXEMPLE 3

Préparation d'un mélange d'organopolysiloxanes à fonction propanaldéhyde dont l'un est une huile α - ω propanaldiméthylsiloxy polydiméthylsiloxane et dont l'autre est une résine comprenant des motifs triméthylsiloxy, méthylpropanalsiloxy et $SiO_2$.

Dans un autoclave en acier inoxydable de capacité 1 litre on introduit sous azote un mélange comprenant :

- 383 g (soit 0,0163 EqVi) d'une huile de formule moyenne

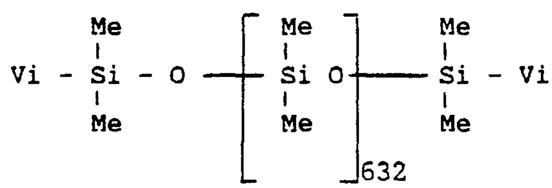

et 82 g (soit 0,0853 EqVi) d'une résine comprenant en moles

40 % de motifs $Me_3SiO_{0,5}$

6 % de motifs MeViSiO

53,5 % de motifs $SiO_2$

puis 0,184 g d'une solution dans du tétraméthyltétravinylcyclotétrasiloxane de $Rh_2$(éthyl2-hexanoate)$_4$, ladite solution comprenant en poids 1,73 % de rhodium, soit 3,19 mg de Rh, c'est-à-dire 0,000031 atg de Rh. La solution est obtenue par chauffage à 110 °C pendant 5 minutes.

- 0,2 g de $P(C_4H_9)_3$ soit 0,001 atg de phosphore.

Le rapport atg de P/atg de Rh = 32, tandis que le rapport EqVi/atg de Rh = 3277.

On chauffe sous agitation et atmosphère d'azote le mélange à 100 °C puis on introduit à l'aide d'une réserve de 500 $cm^3$ en pression de 100 bars de mélange $H_2$ + CO où $H_2/CO=1$, le gaz de synthèse

$H_2/CO$ de façon à atteindre une pression constante de 30 bars dans l'autoclave.

La réaction débute aussitôt, et on peut suivre la consommation du mélange gazeux à l'intérieur de la réserve grâce à un système de mesure de pression. On consomme alors 12.5 bars de mélange $H_2/CO$ en 27 minutes à 100° C soit un taux de transformation complet des motifs $(CH_3)ViSiO$ et $(CH_3)_2ViSiO_{0,5}$.

Après retour à température ambiante et purge du réacteur à l'azote on soutire la nouvelle résine.

Une étude spectroscopique par RMN $^1H$ et $^{29}Si$ revèle que la masse réactionnelle obtenue, transparente et incolore, consiste essentiellement en

- une huile de formule moyenne

$$OHC-CH_2-CH_2-\underset{Me}{\overset{Me}{Si}}-O\left[\underset{Me}{\overset{Me}{Si}}-O\right]_{632}\underset{Me}{\overset{Me}{Si}}-CH_2-CH_2-CHO \qquad 82\ \%\ p/p$$

- et une résine ayant les motifs

$OHC-(CH_2)_2-Si(CH_3)O_{2/2}$ ; $(CH_3)_3SiO_{1/2}$ ; $SiO_2$ 18 % p/p

Teneur en groupements aldéhyde 0.6 %

Teneur en groupements vinyles 0 %

## EXEMPLE 4

Préparation d'une huile α - ω triméthylsiloxy polydiméthylsiloxy, méthylvinylsiloxy, méthylpropanalsiloxane.

Dans un autoclave en acier inoxydable d'un litre on introduit successivement sous azote :

- 394,8 g (soit 0,532 EqVi) d'une huile de formule moyenne

$$(CH_3)_3\,Si\,O\left[\underset{Me}{\overset{Me}{Si}}\,O\right]_{87}\left[\underset{Vi}{\overset{Me}{Si}}\,O\right]_{10,5}Si(CH_3)_3$$

- 114,69 mg d'une solution de $Rh_2$ (éthyl2 hexanoate)$_4$ dans du tétraméthyltétravinylcyclotétrasiloxane, ladite solution contenant 1,72 % en poids de rhodium, soit 1,97 mg de rhodium, c'est-à-dire 0,0000192 atg de rhodium,
- 0,148 g de $P(C_4H_9)_3$, soit $7{,}326 \times 10^{-4}$ atg de phosphore.

Le rapport atg de P/atg de Rh est de 38, et le rapport EqVi/atg de Rh est de 27708.

On chauffe sous agitation et atmosphère d'argon le mélange à 115° C puis on introduit à l'aide d'une réserve de 500 cm$^3$ en pression de 100 bars de mélange $H_2$ + CO où $H_2/CO = 1$, le gaz de synthèse $H_2/CO$ de façon à atteindre une pression constante de 50 bars dans l'autoclave.

La réaction débute aussitôt, et on peut suivre la consommation du mélange gazeux à l'intérieur de la réserve grâce à un système de mesure de pression.

La pression du mélange $H_2/CO$ est maintenue à 50 bars et la température à 115° C pendant toute la durée de la réaction soit 2h 30 mn.

On soutire une huile, transparente et incolore, de formule moyenne

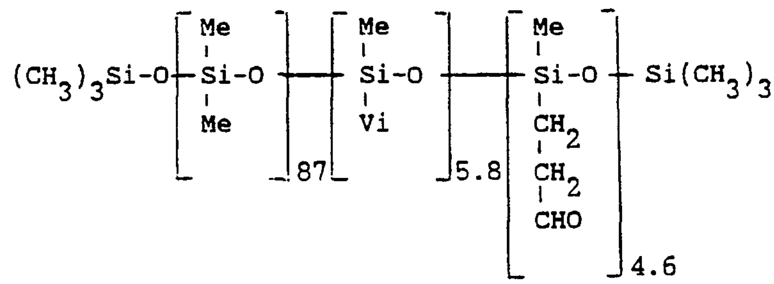

Le résultat de l'étude spectroscopique est le suivant

R.M.N.$^1$H

$Si-CH_2-$ : 0.77 ppm/TMS

$Si-CH_2-CH_2-$ : 2.43 ppm/TMS

$Si-CH_2-CH_2-CHO$ : 9.74 ppm/TMS

$Si(CH_3)-CH-$ : 1.18 ppm/TMS

$Si(CH_3)-CH-CHO$ : 9.94 ppm/TMS

R.M.N $^{29}Si$

$Si(CH_3)_3$ : 7.4 ppm/TMS 1 %

$(CH_3)ViSiO_{2/2}$ : -35.5 ppm/TMS 5.8 %

$(CH_3)_2SiO_{2/2}$

et

$(CH_3)(Propanal)SiO_2$ : -21.6 à -30.6 ppm/TMS 93.2 %

ppm étant la valeur du déplacement chimique exprimée en partie par million par rapport à une référence, dans le cas présent par rapport au TMS, c'est-à-dire par rapport au tétraméthylsilane.

EXEMPLE 5

Préparation d'un $\alpha$ - $\omega$ triméthylsiloxy polydiméthylsiloxy, méthylpropanalsiloxane.

Dans un autoclave en acier inoxydable de 1 litre on introduit successivement :

- 340 g (soit 0,458 Eq.Vi) d'une huile de formule moyenne

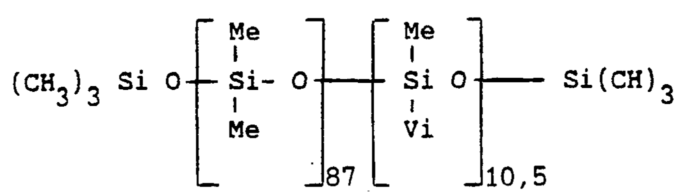

- 139,4 mg d'une solution de $Rh_2$ (éthyl2 hexanoate)$_4$ dans du tétraméthyltétravinylcyclotétrasiloxane, ladite solution contenant, en poids, 1,72 % de Rh, soit 2,397 mg de rhodium c'est-à-dire 0,0000233 atg de rhodium.

- 0,2 g de $P(C_4H_9)_3$ préalablement chauffée à 110° C pendant 5 minutes, soit 0,001 atg de phosphore.

Le rapport atg de P/atg de Rh est de 43 et le rapport EqVi/atg de Rh est de 19656.

On chauffe sous agitation et atmosphère d'argon le mélange à 104° C puis on introduit à l'aide d'une réserve de 500 cm$^3$ en pression de 107 bars de mélange $H_2$ + CO où $H_2/CO = 1$, le gaz de synthèse $H_2/CO$ de façon à atteindre une pression constante de 30 bars dans l'autoclave.

La réaction débute aussitôt, et on peut suivre la consommation du mélange gazeux à l'intérieur de la réserve grâce à un système de mesure de pression.

La pression du mélange $H_2/CO$ est maintenue à 30 bars et la température à 105° C pendant toute la durée de la réaction soit 50 mn. La consommation du mélange $H_2/CO$ correspond à une diminution de pression dans la réserve de 43 bars.

On soutire une huile, transparente et incolore, de formule moyenne

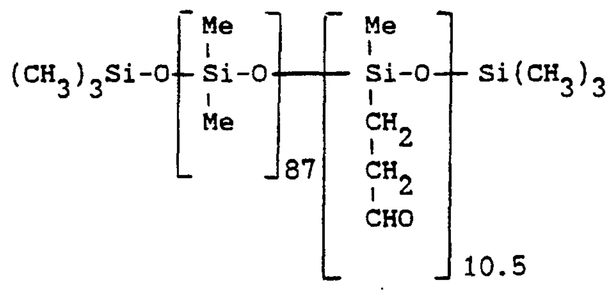

Le résultat de l'étude spectroscopique est le suivant

R.M.N.$^1$H

Si-$CH_2$- : 0.77 ppm/TMS
Si-$CH_2$-$CH_2$- : 2.43 ppm/TMS
Si-$CH_2$-$CH_2$-CHO : 9.74 ppm/TMS 3.5 % molaire
Si($CH_3$)-CH- : 1.18 ppm/TMS
Si($CH_3$)-CH-CHO : 9.94 ppm/TMS 2 % molaire

R.M.N $^{29}$Si

$Si(CH_3)_3$ : 7.4 ppm/TMS 2 %
$(CH_3)_2$ $SiO_{2/2}$
et
($CH_3$)(Propanal)$SiO_2$ : -21.6 à -30.6 ppm/TMS 98 %

EXEMPLE 6

Préparation d'un mélange d'organopolysiloxanes dont l'un est un α ω propanal diméthylsiloxy, polydiméthylsiloxy, polyméthylpropanal siloxane et dont l'autre est une résine à motifs triméthylsiloxy, méthylpropanalsiloxy et $SiO_2$.

Dans un autoclave en acier inoxydable de 1 litre on introduit sous argon un mélange comprenant :
- 190 g (soit 0,2 EqVi) d'une huile de formule moyenne

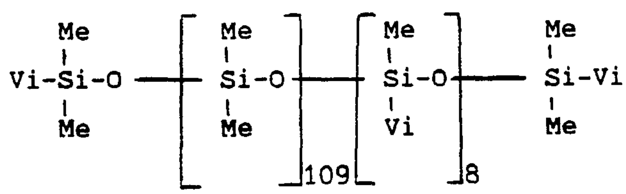

et 131 g (soit 0,146 EqVi) d'une résine comprenant en moles :
- 40 % de motifs $Me_3SiO_{0,5}$
- 6 % de motifs MeViSiO
-53,5 % de motifs $SiO_2$

puis 0,149 g d'une solution de $Rh_2$(éthyl2 hexanoate)$_4$ dans du tétraméthyltétravinylcyclotétrasiloxane, la dite solution contenant 1,72 % en poids de rhodium, soit 2,56 mg de rhodium, c'est-à-dire 0,000025 atg de rhodium. La solution est obtenue par chauffage à 110° C pendant 5 minutes.
- 0,2 g de $P(C_4H_9)_3$ soit 0,001 atg de P.

Le rapport atg de P/atg de Rh est de 40, tandis que le rapport EqVi/atg de Rh est de 13840.

On chauffe sous agitation et atmosphère d'argon le mélange à 100° C puis on introduit à l'aide d'une réserve de 500 cm$^3$ en pression de 100 bars de mélange $H_2$ + CO où $H_2$/CO = 1, le gaz de synthèse $H_2$/CO de façon à atteindre une pression constante de 30 bars dans l'autoclave.

La réaction débute aussitôt, et on peut suivre la consommation du mélange gazeux à l'intérieur de la réserve grâce à un système de mesure de pression. On consomme alors 28.1 bars de mélange $H_2$/CO en 50 minutes à 100° C soit un taux de transformation complet des groupements $(CH_3)_2ViSiO_{1/2}$ et ($CH_3$)-

$ViSiO_{2/2}$. Après retour à température ambiante et purge du réacteur à l'azote on soutire la masse réactionnelle obtenue, incolore et transparente.

Une étude spectroscopique montre que cette masse réactionnelle comprend essentiellement

- une huile de formule moyenne

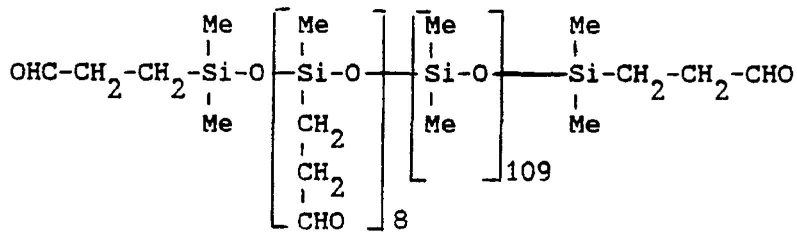

et une résine ayant les motifs suivants

$OHC-(CH_2)_2-Si(CH_3)O_{2/2}$ ; $(CH_3)_3SiO_{1/2}$ ; $SiO_2$

Teneur en groupements aldéhyde 3,1 %

Teneur en groupements vinyle 0 %

EXEMPLE 7

Réticulation par l'oxygène de l'air du mélange d'organosiloxanes à fonction propanal obtenu à l'exemple 6.

On étend sur des plaques une épaisseur de 3 mm du mélange d'organopolysiloxanes et on laisse sécher à l'air à différentes températures dans le but d'obtenir des films.

La potentiabilité de réticulation de ce mélange (de la masse réactionnelle obtenue) est déterminée par mesure du taux de réticulation du mélange selon la méthode d'extraction de films par un solvant en faisant intervenir les notions de taux de gel et d'indice de gonflement.

On opère l'extraction du film dans du chlorure de méthylène sur 1 à 5 g de film sec introduit au fond d'un panier déposé au fond d'un vase d'extraction d'un appareil SOXHLET.

L'ordre des opérations est le suivant :

1. On introduit le panier dans le vase d'extraction contenant 500 ml de chlorure de méthylène. On chauffe à reflux le chlorure de méthylène. On sort le panier au bout d'une heure et on le pèse égoutté ; on obtient une masse $T_1$.

2. On sèche le panier à l'étuve à 110 °C pendant 15 mn puis on pèse à nouveau, on obtient une masse $T_2$.

3. On introduit 1 à 5 g de film sec dans ce même panier et on pèse l'ensemble panier + échantillon ; on obtient une masse $M_1$.

4. On introduit l'ensemble dans le vase d'extraction contenant le chlorure de méthylène. On chauffe de nouveau à reflux le chlorure de méthylène pendant une heure puis on retire le panier que l'on pèse après l'avoir égoutté. On obtient une masse $M_2$. On sèche l'ensemble panier + échantillon à 110 °C pendant 1 heure et on pèse à nouveau. On obtient une masse $M_3$.

Le taux de gel T.G. en % est calculé par la formule

$$T.G.\ en\ \% = \frac{M_3 - T_2}{M_1 - T_2} \times 100$$

où $M_3 - T_2$ représente la masse sèche de gel après retrait de la totalité de solvant,

où $M_1 - T_2$ représente la masse de la prise d'essai (film)

L'indice de gonflement I.G. est calculé par la formule :

$$I.G. = \frac{M_2 - T_1}{M_3 - T_2} \times 100$$

Les résultats consignés dans le tableau ci-après ont été faits :
- essai 1 : film de 3 mm obtenu après exposition du mélange à l'air 6 jours à 20° C,
- essai 2 : film de 3 mm obtenu après exposition du mélange à l'air 6 jours à 60° C,
- essai 3 : film de 3 mm obtenu après exposition du mélange à l'air 2 jours à 110° C.

| Essai | T.G. en % | I.G. en % |
|---|---|---|
| 1 | 71,9 | 427 |
| 2 | 83,3 | 387 |
| 3 | 90,3 | 463 |

## Revendications

1. - Procédé de préparation de polyorganosiloxane, réticulable en élastomère silicone, présentant par molécule au moins un motif répondant à la formule générale :

$$X\ Ra\ Si\ O_{\frac{3-a}{2}} \qquad (1)$$

dans laquelle :
- X est choisi parmi les radicaux $-CH_2-CH_2-CHO$ et $-CH(CHO)-CH_3$,
- les radicaux R, identiques ou différents, sont choisis parmi le radical phényle, trifluoro-3,3,3 propyle et un radical alkyle ayant de 1 à 12 atomes de carbone,
- a est choisi parmi 0, 1 et 2,
caractérisé en ce que l'on effectue la réaction, au moins partielle, d'un polysiloxane dont au moins un motif siloxyle répond à la formule générale

$$(CH_2 = CH)\ R_a\ Si\ O_{\frac{3-a}{2}} \qquad (1')$$

dans laquelle R et a ont la signification donnée ci-avant,
avec de l'hydrogène et du monoxyde de carbone, en présence d'un composé des métaux de transition du groupe 8 et d'une triorganophosphine et/ou d'un triorganophosphite, caractérisé en ce qu'en fin de réaction on soutire la masse réactionnelle homogène, contenant notamment le polysiloxane, ayant au moins un motif de formule (1) et le composé métallique du système catalytique, la dite masse réactionnelle étant réticulable en élastomère silicone sous l'action de l'oxygène de l'air.

2. - Procédé selon la revendication 1, dans lequel en fin de réaction, on soumet la masse réactionnelle à une dépression pour en éliminer la triorganophosphine et/ou le triorganophosphite, avant de soutirer ladite masse réactionnelle.

3. - Procédé selon l'une quelconque des revendications précédentes caractérisé en ce que le polyorganosiloxane ayant au moins un motif de formule (1) comprend au moins trois groupements siloxyle

et en ce que le composé des métaux de transition du groupe 8 est choisi parmi les composés du rhodium et/ou du cobalt.

4. - Procédé selon l'une quelconque des revendications précédentes caractérisé en ce que le polysiloxane présentant par molécule au moins un motif répondant à la formule 1 est choisi parmi les diorganopolysiloxanes de formule :

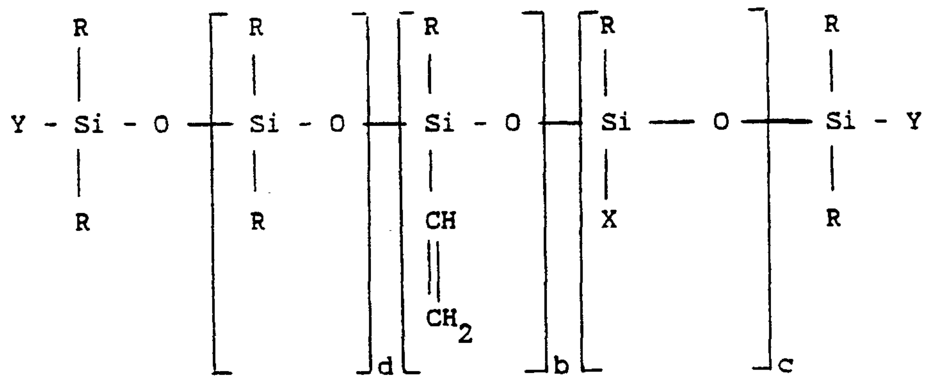

(2)

dans laquelle :

- X et R, identiques ou différents, ont la signification donnée à la revendication 1,
- Y, identiques ou différents, sont choisis parmi les radicaux R et X,
- d est un nombre entier compris entre 0 et 1 000 inclusivement,
- b est un nombre entier compris entre 0 et 50 inclusivement,
- c est un nombre entier compris entre 0 et 100 inclusivement et, si c est 0, au moins un des deux radicaux Y est X,
- d + b + c est au moins égal à 1

et ceux de formule :

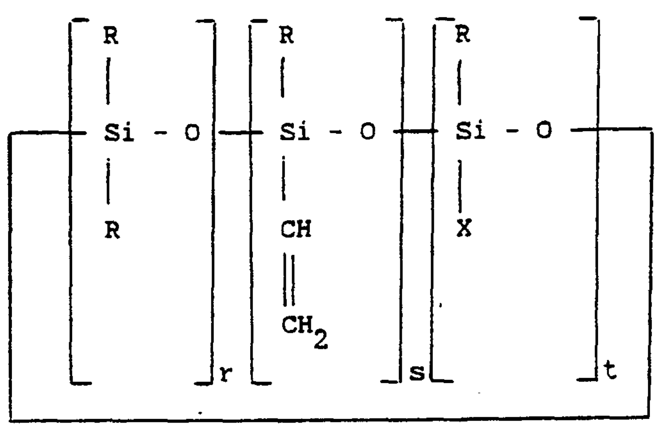

(3)

dans laquelle :

- R, X ont la signification ci-dessus,
- r est un nombre entier compris entre 0 et 9 inclus,
- s est un nombre entier compris entre 0 et 9 inclus,
- t est un nombre entier compris entre 1 et 10 inclus.

et caractérisé en ce que le polysiloxane de départ dont au moins un motif siloxyle répond à la formule générale (I′) est choisi parmi ceux de formule :

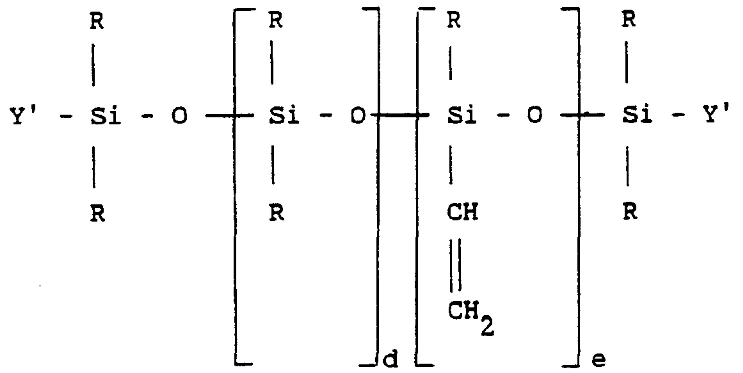

(2')

dans laquelle :

- R et a ont la signification ci-dessus,
- e est égal à b + c, et
- Y′ est choisi parmi un radical vinyle et le radical R et, quand e = O, au moins un des deux Y′ est un radical vinyle,

et de formule :

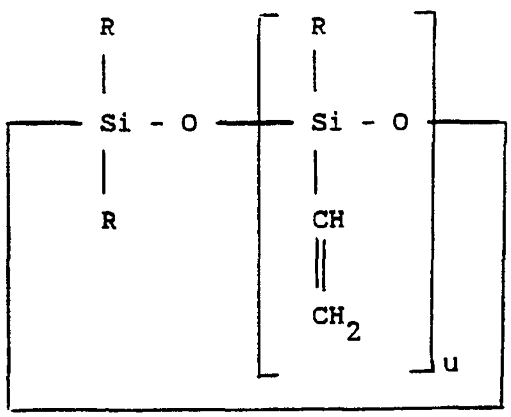

(3')

dans laquelle R a la signification donnée ci-dessus et u est égal à s + t, r + u étant compris entre 3 et 10 inclus.

5. - Procédé selon l'une quelconque des revendications précédentes caractérisé en ce que le système catalytique utilisé est liquide.

6. - Procédé selon l'une quelconque des revendications précédentes caractérisé en ce que le système catalytique est en solution dans un polysiloxane de préférence cyclique.

7. - Procédé selon l'une quelconque des revendications précédentes caractérisé en ce que le rapport EqSiVi/atg de métal est supérieur à 600, EqSiVi représentant le nombre d'équivalent de mole de groupement Sivinyle dans le polysiloxane de départ à motifs (1), atg de métal représentant le nombre d'atome gramme du métal du groupe 8 utilisé.

8. - Procédé selon l'une quelconque des revendications précédentes caractérisé en ce que le rapport Eq SiVi/at de métal est compris entre 700 et 40 000, de préférence entre 800 et 35 000.

9. - Procédé selon l'une quelconque des revendications précédentes caractérisé en ce que le rapport atg de P/atg de métal est compris entre 1 et 60, atg de P représentant le nombre d'atome-gramme de phosphore de la phosphine ou du phosphite du système catalytique, tandis que atg de métal est explicité à la revendication 8.

10. - Procédé selon l'une quelconque des revendications précédentes caractérisé en ce que la quantité, en poids, de composé métallique utilisé correspond à entre 0,1 et 100 parties par million basée sur l'organopolysiloxane de départ de formule 1′, 2′ ou 3′.

11. - Procédé selon l'une quelconque des revendications précédentes caractérisé en ce que la quantité de composé métallique, en poids, utilisé correspond à entre 0,5 et 25 parties par million par rapport à l'organopolyxiloxane de départ de formule 1′, 2′, 3′, le composé métallique étant un composé du rhodium.

12. - Elastomères obtenus avec les organopolysiloxanes selon l'une quelconque des revendications précédentes.

Office européen des brevets

# RAPPORT DE RECHERCHE EUROPEENNE

Numero de la demande

EP 90 42 0185

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 632 869 (BAYER)<br>* Revendication 1; page 10, lignes 59-66; page 11, lignes 35-37; page 12, en entier; page 13, lignes 27-41 *<br>--- | 1 | C 08 G 77/38 |
| A | EP-A-0 089 690 (UNION CARBIDE)<br>* Revendications 1,7; page 6, lignes 16-19; page 17, lignes 6-23 *<br>--- | 1 | |
| A | EP-A-0 183 280 (UNION CARBIDE)<br>* Revendication 1 *<br>----- | 1 | |
| | | | **DOMAINES TECHNIQUES RECHERCHES (Int. Cl.5)** |
| | | | G 08 G |

Le présent rapport a été établi pour toutes les revendications

| Lieu de la recherche | Date d'achèvement de la recherche | Examinateur |
|---|---|---|
| LA HAYE | 03-08-1990 | DEPIJPER R.D.C. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)